# EUROPEAN PATENT APPLICATION

(11) **EP 4 830 602 A1**
(43) Date of publication of application: **28.10.2026**
(21) Application number: 26161491.1
(22) Date of filing: 27.02.2026
(51) Int. Cl.: A47J 37/06

(54) **HEATING CONTROL METHOD AND APPARATUS FOR AIR FRYER**

(30) Priority: 06.03.2025 CN 202510267537
(71) Applicant: Shenzhen Chenbei Technology Co., Ltd., Shenzhen, Guangdong 518000 (CN)
(72) Inventor: XU, Zecan, SHENZHEN, 518000 (CN); CHEN, Zhenlang, SHENZHEN, 518000 (CN); ZHENG, Xiaojun, SHENZHEN, 518000 (CN)
(74) Representative: Bayramoglu et al.

(57) **Abstract**

The present disclosure provides a heating control method and apparatus for an air fryer, and relates to the technical field of kitchen appliances. By delaying turning on/off a heating element, the present disclosure prevents multiple heating elements from being simultaneously turned on/off, such that the air fryer does not generate a high instantaneous power to cause an excessive circuit load, ensuring safety of the circuit in use. The method includes: in response to heating of the air fryer, determining an on-off combined state for heating elements in the air fryer according to a power condition and/or a temperature condition, where the power condition indicates that a total power of heating elements is less than a power threshold, the temperature condition indicates that a real-time thermistor temperature of each of the heating elements is less than a temperature threshold, and the on-off combined state includes on/off states of the heating elements; and delaying turning on/off a corresponding heating element according to the on-off combined state for the heating elements in the air fryer.

## Description

### TECHNICAL FIELD

The present disclosure relates to the technical field of kitchen appliances, and in particular to a heating control method and apparatus for an air fryer.

### BACKGROUND TECHNOLOGY

Air fryers are kitchen appliances that cook food by circulating hot air, making the food crispy with little or no oil. They are ideal for daily home cooking and preparation of various snacks.

Regarding the cooking functions of air fryers, the capacity of air fryers for cooking food are determined by cooking spaces. A single cooking space cannot meet user requirements for air fryers. In order to enhance the user experience, multiple cooking spaces may be provided in air fryers to offer zoned cooking functions. However, a single heating element cannot meet cooking requirements of multiple cooking spaces, which may result in uneven heat distribution, low cooking efficiency and the like. Hence, air fryers with multiple cooking spaces are typically provided with multiple heating elements. Nevertheless, when an air fryer is started for heating, multiple heating elements are simultaneously turned on, such that the air fryer generates a high instantaneous power to create a high circuit load, affecting safety of the circuits in use.

### CONTENT OF THE INVENTION

In view of this, the present disclosure provides a heating control method and apparatus for an air fryer, so as to solve the prior art problem that when multiple heating elements are simultaneously turned on, the air fryer generates a high instantaneous power to cause a high circuit load, affecting safety of the circuit in use.

A first aspect of the present disclosure provides a heating control method for an air fryer, including:
in response to heating of the air fryer, determining an on-off combined state for heating elements in the air fryer according to a power condition and/or a temperature condition, where the power condition indicates that a total power of heating elements is less than a power threshold, the temperature condition indicates that a real-time thermistor temperature of each of the heating elements is less than a temperature threshold, and the on-off combined state includes on/off states of the heating elements; and
delaying turning on/off a corresponding heating element according to the on-off combined state for the heating elements in the air fryer.

Further, the determining the on-off combined state for the heating elements in the air fryer according to the power condition and/or the temperature condition includes:
determining a preferential heating element in the air fryer according to the power condition, where the preferential heating element includes at least one heating element meeting the power condition in the air fryer;
determining the on-off combined state for the heating elements in the air fryer according to the preferential heating element; and
delaying turning on the preferential heating element according to the on-off combined state for the heating elements in the air fryer.

Further, after the delaying turning on the preferential heating element according to the on-off combined state for the heating elements in the air fryer, the heating control method for an air fryer further includes:
re-determining the on-off combined state for the heating elements in the air fryer according to the temperature condition; and
if a re-determined on-off combined state changes, delaying turning on/off the corresponding heating element according to the changed on-off combined state.

Further, the re-determining the on-off combined state for the heating elements in the air fryer according to the temperature condition includes:
traversing real-time thermistor temperatures of the heating elements according to a first time interval;
comparing the real-time thermistor temperature of each of the heating elements with a set target temperature of the corresponding heating element to obtain a comparison result; and
re-determining the on-off combined state for the heating elements in the air fryer according to the comparison result.

The comparison result includes: if the real-time thermistor temperature is greater than the target temperature, determining the corresponding heating element in the air fryer as the off state; and if the real-time thermistor temperature is less than or equal to the target temperature, determining the corresponding heating element in the air fryer as the on state.

Further, before the re-determining the on-off combined state for the heating elements in the air fryer according to the temperature condition, the heating control method for an air fryer further includes:
according to a heating parameter input by a user, querying set target temperatures of different heating elements in the air fryer from a preset parameter mapping table, where the parameter mapping table records the set target temperatures of the different heating elements in the air fryer corresponding to different heating parameters; and
according to the set target temperatures of the different heating elements, controlling the heating elements in the air fryer for the heating.

Further, the delaying turning on/off the corresponding heating element according to the on-off combined state for the heating elements in the air fryer includes:
determining enable flags of the heating elements in the air fryer according to the on-off combined state for the heating elements in the air fryer; and
according to the enable flags of the heating elements in the air fryer, controlling a time of delaying turning on/off a relay corresponding to the corresponding heating element.

Further, the according to the enable flags of the heating elements in the air fryer, controlling the time of delaying turning on/off the relay corresponding to the corresponding heating element includes:
presetting polling times of relays corresponding to the different heating elements;
performing polling according to a second time interval on the relays corresponding to the heating elements in the air fryer, so as to determine whether a polling count reaches a polling time of a corresponding relay, where the second time interval is less than the first time interval; and
if yes, turning on/off the relay corresponding to the corresponding heating element according to the enable flags of the heating elements in the air fryer, so as to turn on/off the corresponding heating element.

Further, before the performing polling according to the second time interval on the relays corresponding to the heating elements in the air fryer, so as to determine whether the polling count reaches the polling time of the corresponding relay, the heating control method for an air fryer further includes:
according to the enable flags of the heating elements in the air fryer, determining whether the enable flags of the heating elements are simultaneously in the on state; and
if yes, adjusting an enable flag of at least one heating element in the air fryer to the off state, so as to turn off a relay corresponding to the at least one heating element.

Further, if an enable flag of a first heating element in the air fryer is adjusted to the off state, the polling is performed according to the second time interval on a first relay corresponding to the first heating element in the air fryer, so as to determine whether the polling count reaches a polling time of the first relay;
if yes, the first relay corresponding to the first heating element is turned off, so as to turn off the first heating element; and the polling is performed on another relay corresponding to another heating element in the air fryer, so as to determine whether the polling count reaches a polling time of the another relay; and
if yes, the another relay corresponding to the another heating element is turned on, so as to turn on the another heating element.

Further, after the delaying turning on/off the corresponding heating element according to the on-off combined state for the heating elements in the air fryer, the heating control method for an air fryer further includes:
in response to an interactive instruction for the heating elements, adjusting the on/off states and/or heating powers of the heating elements in the air fryer according to the interactive instruction;
delaying turning on/off the corresponding heating element in the air fryer according to adjusted on/off states of the heating elements; and/or
according to adjusted heating powers of the heating elements, controlling the corresponding heating element in the air fryer for the heating.

Further, after the delaying turning on/off the corresponding heating element according to the on-off combined state for the heating elements in the air fryer, the heating control method for an air fryer further includes:
acquiring information of food cooked in the air fryer;
adjusting heating powers and/or heating times of the heating elements in the air fryer according to the information of the food cooked in the air fryer; and
according to adjusted heating powers and/or adjusted heating times of the heating elements, controlling the corresponding heating element in the air fryer for the heating.

A second aspect of the present disclosure provides a heating control apparatus for an air fryer, including:
a determination unit, configured to determine, in response to heating of the air fryer, an on-off combined state for heating elements in the air fryer according to a power condition and/or a temperature condition, where the power condition indicates that a total power of heating elements is less than a power threshold, the temperature condition indicates that a real-time thermistor temperature of each of the heating elements is less than a temperature threshold, and the on-off combined state includes on/off states of the heating elements; and
a control unit, configured to delay turning on/off a corresponding heating element according to the on-off combined state for the heating elements in the air fryer.

Further, the determination unit is specifically configured to:
determine a preferential heating element in the air fryer according to the power condition, where the preferential heating element includes at least one heating element meeting the power condition in the air fryer; and
determine the on-off combined state for the heating elements in the air fryer according to the preferential heating element.

Accordingly, the control unit is further configured to delay turning on the preferential heating element according to the on-off combined state for the heating elements in the air fryer.

Further, the heating control apparatus for an air fryer further includes:
a re-determination unit, configured to re-determine, after turning on the preferential heating element is delayed according to the on-off combined state for the heating elements in the air fryer, the on-off combined state for the heating elements in the air fryer according to the temperature condition.

The control unit is further configured to delay, if a re-determined on-off combined state changes, turning on/off the corresponding heating element according to the changed on-off combined state.

Further, the re-determination unit is specifically configured to:
traverse real-time thermistor temperatures of the heating elements according to a first time interval;
compare the real-time thermistor temperature of each of the heating elements with a set target temperature of the corresponding heating element to obtain a comparison result; and
re-determine the on-off combined state for all the heating elements in the air fryer according to the comparison result.

The comparison result includes: if the real-time thermistor temperature is greater than the target temperature, the corresponding heating element in the air fryer is determined as the off state; and if the real-time thermistor temperature is less than or equal to the target temperature, the corresponding heating element in the air fryer is determined as the on state.

Further, the heating control apparatus for an air fryer further includes:
a query unit, configured to query, before the on-off combined state for the heating elements in the air fryer is re-determined according to the temperature condition, according to a heating parameter input by a user, set target temperatures of different heating elements in the air fryer from a preset parameter mapping table, where the parameter mapping table records the set target temperatures of the different heating elements in the air fryer corresponding to different heating parameters.

The control unit is further configured to control, according to the set target temperatures of the different heating elements, the heating elements in the air fryer for the heating.

Further, the control unit is specifically configured to:
determine enable flags of the heating elements in the air fryer according to the on-off combined state for the heating elements in the air fryer; and
control, according to the enable flags of the heating elements in the air fryer, a time of delaying turning on/off a relay corresponding to the corresponding heating element.

Further, the control unit is further specifically configured to:
preset polling times of relays corresponding to the different heating elements;
perform polling according to a second time interval on the relays corresponding to the heating elements in the air fryer, so as to determine whether a polling count reaches a polling time of a corresponding relay, where the second time interval is less than the first time interval; and
turn on/off, if yes, the relay corresponding to the corresponding heating element according to the enable flags of the heating elements in the air fryer, so as to turn on/off the corresponding heating element.

Further, the control unit is further specifically configured to:
determine, before performing polling according to a second time interval on the relays corresponding to the heating elements in the air fryer, so as to determine whether a polling count reaches a polling time of a corresponding relay, according to the enable flags of the heating elements in the air fryer, whether the enable flags of the heating elements are simultaneously in the on state; and
adjust, if yes, an enable flag of at least one heating element in the air fryer to the off state, so as to turn off a relay corresponding to the at least one heating element.

Further, the control unit is further specifically configured to:
perform, if an enable flag of a first heating element in the air fryer is adjusted to the off state, the polling according to the second time interval on a first relay corresponding to the first heating element in the air fryer, so as to determine whether the polling count reaches a polling time of the first relay;
turn off, if yes, the first relay corresponding to the first heating element, so as to turn off the first heating element; and perform the polling on another relay corresponding to another heating element in the air fryer, so as to determine whether the polling count reaches a polling time of the another relay; and
turn on, if yes, the another relay corresponding to the another heating element, so as to turn on the another heating element.

Further, the heating control apparatus for an air fryer further includes:
a first adjustment unit, configured to adjust, after turning on/off a corresponding heating element is delayed according to the on-off combined state for the heating elements in the air fryer, in response to an interactive instruction for the heating elements, the on/off states and/or heating powers of the heating elements in the air fryer according to the interactive instruction.

The control unit is further configured to delay turning on/off the corresponding heating element in the air fryer according to adjusted on/off states of the heating elements; and/or control, according to adjusted heating powers of the heating elements, the corresponding heating element in the air fryer for the heating.

Further, the heating control apparatus for an air fryer further includes:
an acquisition unit, configured to acquire, after turning on/off a corresponding heating element is delayed according to the on-off combined state for the heating elements in the air fryer, information of food cooked in the air fryer; and
a second adjustment unit, configured to adjust heating powers and/or heating times of the heating elements in the air fryer according to the information of the food cooked in the air fryer.

The control unit is further configured to control, according to adjusted heating powers and/or adjusted heating times of the heating elements, the corresponding heating element in the air fryer for the heating.

A third aspect of the present disclosure provides a computer device, including a memory and a processor, where the memory is configured to store a computer program, and the processor is configured to execute the computer program to implement the steps of the heating control method for an air fryer in the first aspect.

A fourth aspect of the present disclosure provides a readable storage medium, where a computer program is stored in the computer-readable storage medium, and the computer program is executed by a processor to implement the steps of the heating control method for an air fryer in the first aspect.

With the above technical solutions, comparing the heating control method and apparatus for an air fryer provided by the present disclosure with a present prior art method in which multiple heating elements are simultaneously turned on during heating of the air fryer, in response to heating of the air fryer, the present disclosure determines an on-off combined state for heating elements in the air fryer according to a power condition and/or a temperature condition. The power condition indicates that a total power of heating elements is less than a power threshold. The temperature condition indicates that a real-time thermistor temperature of each of the heating elements is less than a temperature threshold. The on-off combined state includes on/off states of the heating elements. The present disclosure delays turning on/off a corresponding heating element according to the on-off combined state for the heating elements in the air fryer. In the whole process, the present disclosure flexibly controls the on/off states of the heating elements in the air fryer with the power condition and/or the temperature condition, and ensures cooking effects of different cooking spaces in the air fryer. Meanwhile, by delaying turning on/off the heating element, the present disclosure prevents multiple heating elements from being simultaneously turned on/off, such that the air fryer does not generate a high instantaneous power to cause an excessive circuit load, ensuring safety of the circuit in use.

The above description is merely a summary of the technical solutions of the present disclosure. In order to allow the technical means of the present disclosure to be understood clearly and implemented in accordance with the content of the specification and allow the above and other objectives, features, and advantages of the present disclosure to be obviously and easily understood, specific implementations of the present disclosure are described below.

### DESCRIPTION OF THE DRAWINGS

The accompanying drawings described herein are provided for further understanding of the present disclosure, and constitute a part of the present disclosure. The exemplary embodiments of the present disclosure and illustrations thereof are intended to explain the present disclosure, but do not constitute inappropriate limitations to the present disclosure. In the drawings:
FIG. 1 is a flowchart of a heating control method for an air fryer according to an embodiment of the present disclosure;
FIG. 2 is a schematic flowchart of a specific implementation of step 101 in FIG. 1;
FIG. 3 is another flowchart of a heating control method for an air fryer according to an embodiment of the present disclosure;
FIG. 4 is another flowchart of a heating control method for an air fryer according to an embodiment of the present disclosure;
FIG. 5 is a schematic flowchart of a specific implementation of step 102 in FIG. 1;
FIG. 6 is another flowchart of a heating control method for an air fryer according to an embodiment of the present disclosure;
FIG. 7 is a schematic structural diagram of a heating control apparatus for an air fryer according to an embodiment of the present disclosure; and
FIG. 8 is a schematic structural diagram of a computer device according to an embodiment of the present disclosure.

### SPECIFIC IMPLEMENTATIONS

Contents of the present disclosure are described below with reference to a plurality of exemplary embodiments. It should be understood that these embodiments described are only intended to enable those skilled in the art to better understand and implement the contents of the present disclosure, and do not imply any limitation to the scope of the present disclosure.

As used in the specification, the term "include" and its variants are open-ended terms, meaning "including but not limited to". The term "based on" should be understood as "at least partially based on". The term "an embodiment" or "this embodiment" should be understood as "at least one embodiment". The term "another embodiment" should be understood as "at least one another embodiment".

In related art, air fryers with multiple cooking spaces are typically provided with multiple heating elements. However, when the air fryer is started for heating, the multiple heating elements are simultaneously turned on, such that the air fryer generates a high instantaneous power to cause a high circuit load, affecting safety of the circuits in use.

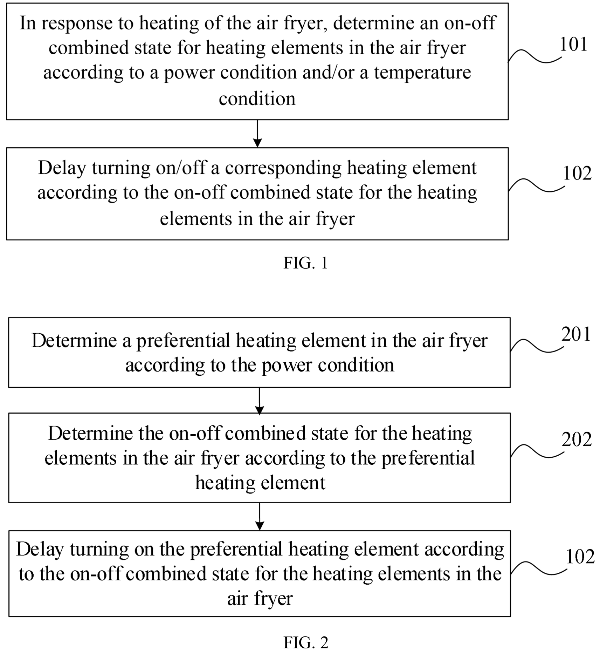

In order to solve this problem, an embodiment provides a heating control method for an air fryer. As shown in FIG. 1, the heating control method for an air fryer includes the following steps:

101: In response to heating of the air fryer, an on-off combined state for all heating elements in the air fryer is determined according to a power condition and/or a temperature condition.

In actual application, the air fryer is typically provided with the heating elements. The heating elements herein may be heating tubes, heating wires, etc. Typically, the air fryer with a single cooking space is provided with a single heating element. The air fryer with two cooking spaces is provided with at least two heating elements. In the embodiment, the air fryer is provided with at least two cooking spaces, and there are at least two heating elements in the air fryer accordingly. Specifically, each cooking space in the air fryer may be provided with one heating element. Alternatively, one cooking space in the air fryer is provided with a high-power heating element, and another cooking space is provided with the high-power heating element and a low-power heating element.

The power condition indicates that a total power of heating elements is less than a power threshold. With the power condition, a quantity threshold of heating elements that are simultaneously turned on in the air fryer can be determined. It is to be understood that due to the limitation of the power condition, simultaneously turning on all heating elements in the air fryer will generate a high instantaneous power to affect circuit safety. Hence, a quantity of heating elements turned on in the air fryer should be less than the quantity threshold. The quantity threshold may be determined according to a power limit parameter of the air fryer, a layout characteristic of the heating elements, powers of the heating elements, and the like. Typically, a higher rated power of the air fryer may indicate a greater quantity of heating elements that are simultaneously turned on. In case of a power overload alert or an abnormal condition of the air fryer in operation, the quantity of heating elements that are simultaneously turned on should be reduced.

Further, under the limitation of the quantity threshold, a preferential heating element is selected in the air fryer according to an actual need. For example, at most two heating elements may be simultaneously turned on in the air fryer. Either the high-power heating element or the heating element located on the cooking space may be preferentially turned on. The on-off combined state for the heating elements in the air fryer can be determined according to a selected heating element. The on-off combined state herein includes on/off states of the heating elements. That is, the preferentially selected heating element is in the on state, and the remaining heating element is in the off state. For example, three heating elements are disposed in the air fryer, including two high-power heating elements and one low-power heating element. With the power condition, it is determined that two heating elements are simultaneously turned on in the air fryer according to the quantity threshold, and the two high-power heating elements are preferentially turned on. Accordingly, the on-off combined state for the heating elements in the air fryer is as follows: The two high-power heating elements are in the on state, and the low-power heating element is in the off state.

The temperature condition indicates that a real-time thermistor temperature of each of the heating elements is less than a temperature threshold. With the temperature condition, the on-off combined state for the heating elements in the air fryer can be adjusted constantly during the heating process of the air fryer. It is to be understood that when the air fryer is heated to a set temperature, the heating element turned on in the air fryer is used for heating. Accordingly, the real-time thermistor temperature of the heating element rises. Once the real-time thermistor temperature of the heating element reaches the temperature threshold, it is indicated that a cooking space where the heating element is located has already achieved the desirable cooking effect. If the heating element is continuously used for heating, the real-time thermistor temperature of the heating element continues to rise to compromise the uniform cooking effect. In other words, the temperature threshold herein is equivalent to an ideal temperature to which the heating resistor reaches when the air fryer is heated to the set temperature. At this time, the heating element reaching the temperature threshold may be adjusted to the off state. Accordingly, the heating element that is not turned on or is turned off is adjusted to the on state.

It is to be noted that since different heating elements in the air fryer have different positions in the cooking space, when the air fryer is heated to a same temperature, temperature thresholds corresponding to the heating elements are also different. For example, three heating elements are disposed in the air fryer. Heating element A has temperature threshold a, heating element B has temperature threshold b, and heating element C has temperature threshold c.

Continuing with the above example, three heating elements are disposed in the air fryer, including two high-power heating elements and one low-power heating element. If a real-time thermistor temperature of one high-power heating element in the air fryer reaches the temperature threshold, and a real-time thermistor temperature of the other high-power heating element does not reach the temperature threshold, the former high-power heating element is adjusted to the off state, and the low-power heating element is adjusted to the on state accordingly.

102: Turning on/off a corresponding heating element is delayed according to the on-off combined state for the heating elements in the air fryer.

In the embodiment, the on/off states of the heating elements in the air fryer can be determined according to the on-off combined state for the heating elements in the air fryer. Upon this, turning on/off the corresponding heating element may be delayed through a timer. Specifically, the timer is disposed in the air fryer. When the heating element in the air fryer is set to the on state, before the heating element is turned on, the timer can be started to count down. If a preset time is reached, the corresponding heating element is turned on, thereby delaying turning on the heating element. Similarly, when the heating element in the air fryer is set as the off state, before the heating element is turned off, the timer can be started to count down. If a preset time is reached, the corresponding heating element is turned off, thereby delaying turning off the heating element.

It is to be understood that in order to improve the cooking effect of the air fryer, multiple cooking modes and algorithms can be set in the air fryer. For example, regarding different food types, turning on/off the heating element is delayed at a specific time point according to a preset cooking curve. Taking toast as an example, turning on the heating element A and the heating element B is delayed at 1 min of the cooking of a cooking assembly in the air fryer, and turning off the heating element B is delayed at 3 min of the cooking.

Comparing the heating control method for an air fryer provided by the embodiment of the present disclosure with a present prior art method in which multiple heating elements are simultaneously turned on during heating of the air fryer, in response to heating of the air fryer, the present disclosure determines an on-off combined state for heating elements in the air fryer according to a power condition and/or a temperature condition. The power condition indicates that a total power of heating elements is less than a power threshold. The temperature condition indicates that a real-time thermistor temperature of each of the heating elements is less than a temperature threshold. The on-off combined state includes on/off states of the heating elements. The present disclosure delays turning on/off a corresponding heating element according to the on-off combined state for the heating elements in the air fryer. In the whole process, the present disclosure flexibly controls the on/off states of the heating elements in the air fryer with the power condition and/or the temperature condition, and ensures cooking effects of different cooking spaces in the air fryer. Meanwhile, by delaying turning on/off the heating element, the present disclosure prevents multiple heating elements from being simultaneously turned on/off, such that the air fryer does not generate a high instantaneous power to cause an excessive circuit load, ensuring safety of the circuit in use.

It is to be understood that the on-off combined state of the air fryer changes in real time with the power condition and/or the temperature condition. Specifically, as shown in FIG. 2, the step 101 includes:
201: A preferential heating element in the air fryer is determined according to the power condition.
202: The on-off combined state for the heating elements in the air fryer is determined according to the preferential heating element.

Accordingly, in the step 102, turning on the preferential heating element is delayed according to the on-off combined state for the heating elements in the air fryer.

In the embodiment, the preferential heating element includes at least one heating element meeting the power condition in the air fryer. For example, a top heating element and a bottom heating element are disposed in the air fryer. The top heating element has a power of P1, the bottom heating element has a power of P2, and P1>P2. It is assumed that the power threshold is Pmax. If the top heating element or the bottom heating element is turned on alone, the power does not exceed the power threshold, i.e., P1<Pmax and P2<Pmax. However, if both the top heating element and the bottom heating element are simultaneously turned on, the total power exceeds the power threshold, i.e., P1+P2>Pmax. It is necessary to determine the preferential heating element according to a specific condition.

It is to be understood that different heating elements in the air fryer have different powers, and the powers of the heating elements have an impact on the heating effect. Herein, the powers and turn-on sequence of the heating elements may be adjusted according to characteristics of food and a best cooking effect, so as to ensure that the total power of the heating elements are less than the power threshold. If the power of the top heating element in the air fryer is obviously higher than the power of the bottom heating element, and the surface of the food can be quickly heated by the top heating element, preferentially turning on the top heating element can quickly achieve the cooking effect. For example, the top heating element in the air fryer has the power of 1,500 W, and the bottom heating element has the power of 1,000 W. For the food that requires quick coloring and crispness, the top heating element may be preferentially turned on.

In an implementation, the turn-on sequence of the heating elements may be adjusted according to an easiness of cooking of the food. For the easy-to-cook food that has a low demand on quick high-temperature heating and only requires simple heating or heat preservation, the bottom heating element with the lower power may be preferentially turned on, preventing overheating or burning to the surface of the food caused by the top high-power heating. Conversely, for the difficult-to-cook food that requires rapid shaping and coloring, and requires sufficient energy in short time to form a crust or a color on the surface, the top heating element with the higher power may be preferentially turned on, preventing a phenomenon that the bottom of the food is overheated, but the surface of the food does not achieve the desirable color and texture.

In another implementation, the turn-on sequence of the heating elements may be adjusted according to a cooking environment and time. In a low-temperature cooking environment, since the temperature of the air fryer rises slowly, the top heating element with the higher power may be preferentially turned on, so as to accelerate the overall temperature in the air fryer more quickly. Similarly, in a scenario where cooking needs to be completed as soon as possible, and the food needs to be heated quickly at the high temperature, the top heating element with the higher power may be preferentially turned on. Conversely, for the food that requires uniform and slow heating, the bottom heating element may be preferentially turned on. Then, whether the top heating element is turned on for quick heating or coloring is determined according to remaining time and food state.

In another implementation, the turn-on sequence of the heating elements may be adjusted according to heat transfer performance of the air fryer. Typically, the top heating element of the air fryer is closer to food placement area, so the heat transfer is more direct and the heating effect on the surface of the food is more obvious. However, the bottom heating element needs to transfer heat to the food by means of air convection and the like, and the heat transfer is relatively complex. For the food that requires quick surface heating, the top heating element is preferentially turned on.

In actual application, while the power condition is met, best turn-on sequences of the heating elements for different foods may be determined through repeated attempts. For example, for the same food, the top heating element is preferentially turned on and the cooking effect is observed. Then, the bottom heating element is preferentially turned on. The cooking effects in two cases are compared, so as to determine the best turn-on sequence of the heating elements. It is to be understood that in view of different cooking parameters of different air fryers, while the power condition is met, the best turn-on sequences of the heating elements for the different foods may be determined according to the parameters of the air fryers.

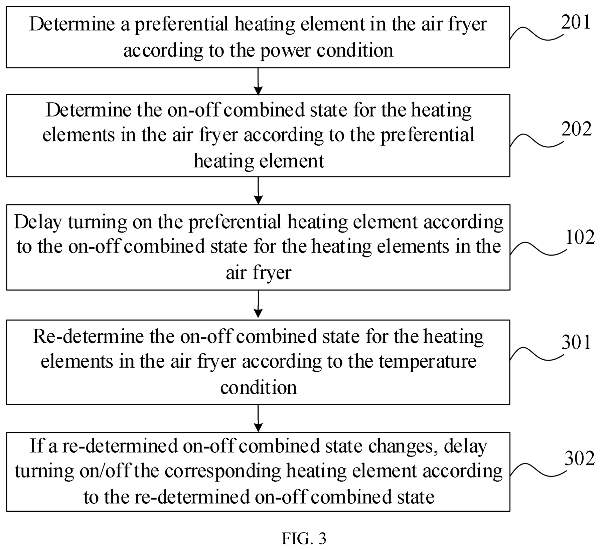

Since the power condition cannot ensure the cooking effect of the air fryer, in order to prevent uneven local heating of the air fryer, further, as shown in FIG. 3, after the step 102, the heating control method for air fryer further includes:
301: The on-off combined state for the heating elements in the air fryer is re-determined according to the temperature condition.
302: If a re-determined on-off combined state changes, turning on/off the corresponding heating element is delayed according to the changed on-off combined state.

In the embodiment, after the preferential heating element in the air fryer is determined, the heating of the air fryer may be controlled by a user-defined target temperature.

Typically, the user-defined target temperature may be achieved in combination with target temperatures of multiple heating elements in the air fryer. Specifically, real-time thermistor temperatures of the heating elements are traversed according to a first time interval. The real-time thermistor temperature of the heating element is compared with a set target temperature of the corresponding heating element to obtain a comparison result. The on-off combined state for all the heating elements in the air fryer is re-determined according to the comparison result. The comparison result includes: If the real-time thermistor temperature is greater than the target temperature, the corresponding heating element in the air fryer is determined as the off state. If the real-time thermistor temperature is less than or equal to the target temperature, the corresponding heating element in the air fryer is determined as the on state.

The real-time thermistor temperature of the heating element refers to a temperature of the heating element monitored by the thermistor in real time during operation of the air fryer. Typically, a resistance of a thermistor corresponding to the heating element during heating of the air fryer changes as the temperature changes. As the heating element heats, a temperature around the heating element rises, and the resistance of the thermistor changes. By measuring the resistance of the thermistor, a present temperature of the heating element may be accurately calculated according to a specific resistance-temperature characteristic curve, thereby realizing real-time monitoring on the temperature of the heating element.

For example, three heating elements are disposed in the air fryer. The heating element A and the heating element B are turned on. The set target temperature of the heating element A is 170°C, and the set target temperature of the heating element B is 175°C. Every one second, the real-time thermistor temperature of the heating element A is 172°C, and the real-time thermistor temperature of the heating element B is 160°C. At this time, since the real-time thermistor temperature of the heating element A is greater than 170°C, the heating element A is determined as the off state. Since the real-time thermistor temperature of the heating element B is less than 175°C, the heating element B is determined as the on state. Accordingly, the on-off combined state for the heating elements is re-determined as that the heating element A is in the off state, the heating element B is in the on state, and the heating element C may be adjusted from the off state to the on state or keep the off state.

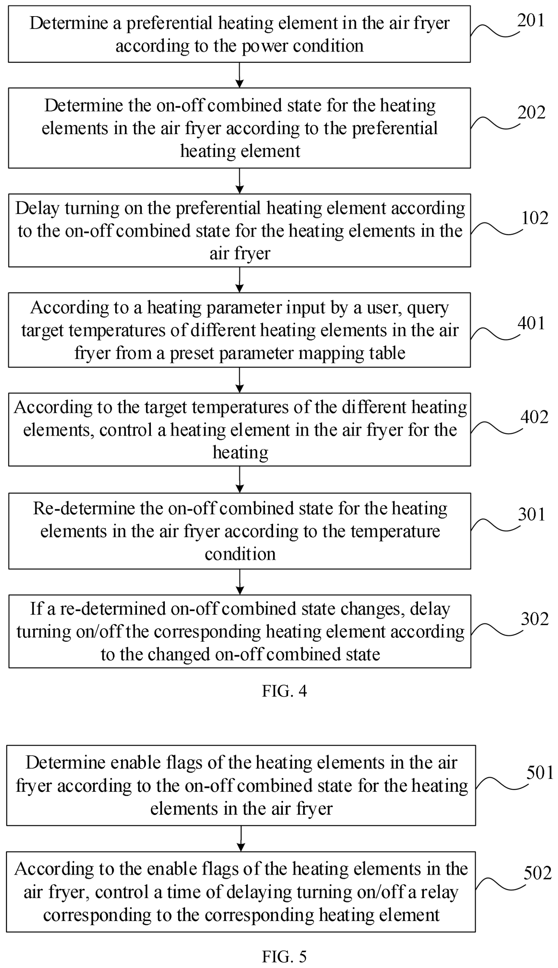

Considering that different heating elements in the air fryer have different positions and different heating parameters, in order to heat the air fryer to the user-defined temperature, set target temperatures of the different heating elements in the heating are different. Further, as shown in FIG. 4, before the step 301, the heating control method for an air fryer further includes:
401: According to a heating parameter input by a user, set target temperatures of different heating elements in the air fryer are queried from a preset parameter mapping table.
402: According to the set target temperatures of the different heating elements, the heating elements in the air fryer are controlled for the heating.

The parameter mapping table records the set target temperatures of the different heating elements in the air fryer corresponding to different heating parameters. The heating parameters herein include, but are not limited to, a heating temperature and a speed gear of the air fryer. Typically, the set target temperature of the heating element located on the top of the cooking space is higher than the user-defined heating temperature, while the set target temperature of the heating element located on the bottom of the cooking space is lower than the user-defined heating temperature. In other words, different heating parameters correspond to set target temperatures of different heating elements. For example, three heating elements are disposed in the air fryer. When the heating temperature is 170°C, heating temperatures of the different heating elements are respectively 180°C, 170°C, and 160°C. When the heating temperature is 160°C, heating temperatures of the different heating elements are respectively 175°C, 160°C, and 155°C.

It is to be understood that according to the set target temperatures of the different heating elements, the different heating elements may cooperate for heating on the basis of the set heating temperatures, such that the air fryer can be quickly heated to the user-defined temperature, thereby preventing uneven heating on the food in the air fryer, and improving the cooking effect.

Specifically, as shown in FIG. 5, the step 102 includes:
501: Enable flags of the heating elements in the air fryer are determined according to the on-off combined state for the heating elements in the air fryer.
502: According to the enable flags of the heating elements in the air fryer, a time of delaying turning on/off a relay corresponding to the corresponding heating element is controlled.

In the embodiment, the enable flag of the heating element is a state flag that is used to indicate whether the heating element is allowed to operate or turned on. Typically, it is a binary bit or a group of binary bits, and is used to indicate an operating state of the corresponding heating element. For example, "1" may indicate that the heating element is enabled, and "0" may indicate that the heating element is not enabled. By setting and reading the enable flag, the operating state of each heating element in the air fryer can be accurately controlled, and the heating element is turned on or off according to the corresponding operating state for the heating.

It is to be understood that when the heating element in the air fryer is controlled, the relay may be used as a switch, and can be configured to switch on or off a circuit of the heating element according to a signal sent from a control system. Specifically, polling times of relays corresponding to the different heating elements is preset. Polling is performed according to a second time interval on the relays corresponding to the heating elements in the air fryer, so as to determine whether a polling count reaches a polling time of a corresponding relay. The second time interval is less than the first time interval. If yes, the relay corresponding to the corresponding heating element is turned on/off according to the enable flags of the heating elements in the air fryer, so as to turn on/off the corresponding heating element.

The polling is intended to sequentially check and operate the relays corresponding to the heating elements in the air fryer according to a certain sequence and a certain time interval. While a state of the enable flag of each heating element is determined, a delayed action of the relay may be controlled through the polling time, so as to delay turning on or off the heating element. The polling time herein is equivalent to a delayed action time of the relay for the heating element. For example, polling times of all relays are set as 10 counting units. While the corresponding on-off combined state for the heating elements is determined, the polling is performed every 10 ms on a relay corresponding to a first heating element, so as to determine whether a polling count reaches the 10 counting units. If yes, the first heating element is turned on/off according to an enable flag of the first heating element. Then, the polling is performed on a relay corresponding to a second heating element, so as to determine whether a polling count reaches the 10 counting units. If yes, the second heating element is turned on/off according to an enable flag of the second heating element. The polling is continuously performed on a relay corresponding to a next heating element in the air fryer, until the polling on a relay corresponding to a last heating element is completed, and timing functions of all relays are closed. Accordingly, the polling is performed on the relays corresponding to the heating elements in the air fryer in a next time interval.

In actual application, in order to prevent the heating elements from being simultaneously turned on, before the polling is performed on the relays corresponding to the heating elements in the air fryer, according to the enable flags of the heating elements in the air fryer, whether the enable flags of the heating elements are simultaneously in the on state is determined. If yes, an enable flag of at least one heating element in the air fryer is adjusted to the off state, so as to turn off a relay corresponding to the at least one heating element. Preferably, the first heating element subjected to the polling is adjusted to the off state, and other elements may be maintained at the on state.

Specifically, if an enable flag of a first heating element in the air fryer is adjusted to the off state, the polling is performed according to the second time interval on a first relay corresponding to the first heating element in the air fryer, so as to determine whether the polling count reaches a polling time of the first relay. If yes, the first relay corresponding to the first heating element is turned off, so as to turn off the first heating element. The polling is performed on another relay corresponding to another heating element in the air fryer, so as to determine whether the polling count reaches a polling time of the another relay. If yes, the another relay corresponding to the another heating element is turned on, so as to turn on the another heating element.

Accordingly, after the polling is performed completely on the relays corresponding to the heating elements in the air fryer, the polling count is reset to zero, and next polling is performed. It is to be noted that short sleep time may be added upon completion of the polling, so as not to excessively occupy system resources during the polling. This allows the central processing unit (CPU) to have more idle time to handle other tasks, improving the overall performance of the system.

For example, enable flags of three heating elements in the air fryer are in the on state. In one polling process, an enable flag of a first heating element is adjusted to the off state. First of all, whether a polling count reaches a polling time of a relay corresponding to the first heating element is determined. If yes, the first heating element is turned off through the first relay corresponding to the first heating element in the air fryer. Then, whether a polling count reaches a polling time of a relay corresponding to a second heating element is determined. If yes, the second heating element is turned on through the relay corresponding to the second heating element in the air fryer. At last, whether a polling count reaches a polling time of a relay corresponding to a third heating element is determined. If yes, the third heating element is turned on through the relay corresponding to the third heating element in the air fryer. Upon completion of the polling process, a next time interval is started, and the polling is performed on the relays corresponding to the heating elements in the air fryer.

In the embodiment, by performing the polling on the relays corresponding to the heating elements in the air fryer, when some heating element needs to be turned on, the corresponding relay is not turned on immediately, but is turned on after the polling time. In other words, when the enable flag of the top heating element in the air fryer is set as "1", and the polling is performed on the relay corresponding to the top heating element, if the polling count reaches the polling time, the relay is turned on, and the top heating element starts operating. Accordingly, when the enable flag of the bottom heating element in the air fryer is set as "0", and the polling is performed on the relay corresponding to the bottom heating element, if the polling count reaches the polling time, the relay is turned off, and the bottom heating element stops operating.

It is further to be noted that a polling delay may be controlled through the polling time of the relay corresponding to the heating element. The polling time herein may control a time of turning on/off each heating element according to different cooking requirements, ensuring that the food can be cooked at appropriate temperature and time, and improving the cooking effect and food cooking quality of the air fryer. This can further prevent a current surge due to a fact that multiple heating elements are simultaneously turned on/off, protecting the circuit and the heating element, and prolonging the service life of the air fryer. Certainly, to facilitate the implementation of more complex cooking functions and modes, different strategies for delaying turning on/off the heating element may further be provided according to different food types and cooking stages, thereby achieving functions such as segmented cooking and heat preservation.

In actual application, the heating control of the air fryer can be realized in combination with a detection module and a control module. When the air fryer is started for heating, the detection module is configured to detect powers of the heating elements in the air fryer as well as thermistor temperatures of the heating elements in real time. During the heating of the air fryer, the control module is configured to control the preferential turn-on sequence of the heating elements in the air fryer according to the power condition, so as to delay turning on/off the heating elements according to the preferential turn-on sequence. The control module is further configured to control state changes of the heating elements in the air fryer according to the temperature condition, so as to delay turning on/off the heating elements according to the state changes. It is to be understood that for the sake of uniform heating of the food in the air fryer, turning on/off each heating element in the air fryer is delayed based on custom settings. In this way, while meeting the power condition and the temperature condition, the control module can control turn-on time and/or turn-off time of the heating element. For example, the heating element is turned on for time t1 and turned off for time t2. After the heating element is turned on for the time t1, the heating element is turned off. After the heating element is turned off for the time t2, the heating element is turned on.

It is assumed that the air fryer includes the top heating element and the bottom heating element, and the air fryer has the power threshold of 3,000 W, and the temperature threshold of 220°C. If the detection module detects that a total power of the top heating element and the bottom heating element reaches 3,500 W when both are turned on and is greater than the power threshold, according to the power condition, the control module preferentially turns on the bottom heating element, turns on the top heating element with a delay of 2 s, and appropriately lowers the power of the top heating element, such that the total power of the top heating element and the bottom heating element are maintained within 3,000 W. If detecting that the thermistor temperature of the bottom heating element reaches 215°C and is close to the temperature threshold, the control module controls the bottom heating element to enter an intermittent heating mode, i.e., turns off the bottom heating element for 3 seconds and then turns on the bottom heating element for 5 seconds. This ensures that the bottom heating element is not overheated, and continuously provides energy for the air fryer to guarantee uniform heating on the food. When the air fryer needs to be stopped, the control module lowers the powers of the heating elements to 0, and cut off a power supply completely after a 5-second delay, thereby delaying turning off the heating elements.

In actual application, the heating elements of the air fryer may be flexibly adjusted through an interactive button. With the interactive button, the on/off states and/or the heating powers of the heating elements can be adjusted in a customized manner. Specifically, in response to an interactive instruction for the heating elements, the on/off states and/or heating powers of the heating elements in the air fryer are adjusted according to the interactive instruction. Turning on/off the corresponding heating element in the air fryer is delayed according to adjusted on/off states of the heating elements. And/or according to adjusted heating powers of the heating elements, the corresponding heating element in the air fryer is controlled for the heating. It is to be understood that when the air fryer is used, different requirements are imposed on cooking effects according to different cooked foods. An intelligent control system in the air fryer can realize interaction with the user. It accurately identifies heating requirements on the food through the interactive instruction, thereby switching the on/off states of the heating elements. In addition to the on/off states, the heating powers of the heating elements may further be adjusted through interaction. For example, in an early stage of cooking, in order to accelerate the temperature of the air fryer, the heating elements operate at high powers to shorten preheating time. When the temperature in the air fryer is close to the user-defined temperature, the powers of the heating elements can be lowered to maintain the stable temperature in the air fryer, preventing the food from being burned due an excessive temperature.

In actual application, the heating elements of the air fryer may be adaptively adjusted according to information of a cooked food. In this way, the heating elements are adaptively turned on/off according to the information of the food, so as to establish a more reasonable on-off combined state for the heating elements, and improve the cooking effect of the air fryer. Specifically, information of food cooked in the air fryer is acquired. Heating powers and/or heating times of the heating elements in the air fryer are adjusted according to the information of the food cooked in the air fryer. According to adjusted heating powers and/or adjusted heating times of the heating elements, the corresponding heating element in the air fryer is controlled for the heating. It is to be understood that different foods in the air fryer have different requirements on the cooking effect. Herein, food mapping table may be established, so as to record heating powers and/or heating times of the heating elements when the best cooking effect is achieved under characteristics of different foods. Then, a sensor in the air fryer is used to monitor the characteristics of the foods, so as to adjust the heating powers and/or heating times of the heating elements in real time according to the characteristics of the foods.

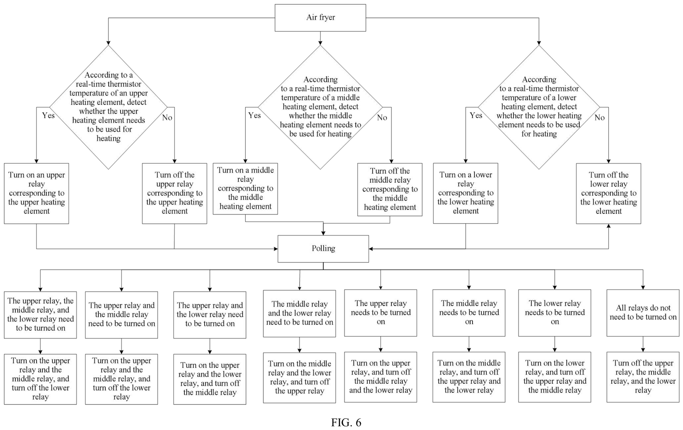

Further, as a specific implementation of the above method, the embodiment of the present disclosure provides another flowchart of the heating control method for an air fryer. As shown in FIG. 6, three heating elements are disposed in the air fryer, with on/off states being respectively controlled by an upper relay, a middle relay, and a lower relay. After an on-off combined state for the three heating elements in the air fryer is determined, relays corresponding to the heating elements are turned on/off. In a heating process of the heating element, whether the heating element needs to be used for heating is detected according to a real-time thermistor temperature of each heating element. If the heating element needs to be used for heating, the relay corresponding to the heating element is turned on. If the heating element does not need to be used for heating, the relay corresponding to the heating element is turned off. Before the relay corresponding to the heating element is turned on/off, polling is performed on the relay, so as to determine whether to delay turning on/off the corresponding heating element.

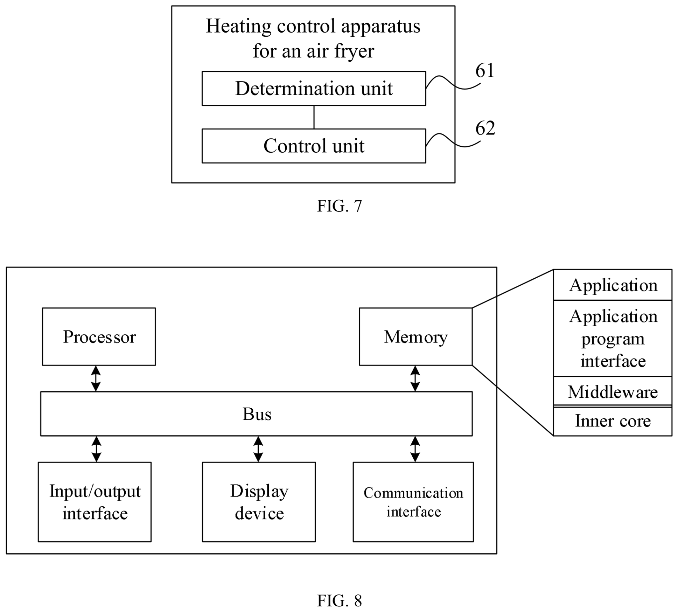

Further, as a specific implementation of the above method, an embodiment of the present disclosure provides a heating control apparatus for an air fryer. As shown in FIG. 7, the heating control apparatus for an air fryer includes: determination unit 61 and control unit 62.

The determination unit 61 is configured to determine, in response to heating of the air fryer, an on-off combined state for heating elements in the air fryer according to a power condition and/or a temperature condition, where the power condition indicates that a total power of heating elements is less than a power threshold, the temperature condition indicates that a real-time thermistor temperature of each of the heating elements is less than a temperature threshold, and the on-off combined state includes on/off states of the heating elements.

The control unit 62 is configured to delay turning on/off a corresponding heating element according to the on-off combined state for the heating elements in the air fryer.

Comparing the heating control apparatus for an air fryer provided by the embodiment of the present disclosure with a present prior art method in which multiple heating elements are simultaneously turned on during heating of the air fryer, in response to heating treatment of the air fryer, the present disclosure determines an on-off combined state for heating elements in the air fryer according to a power condition and/or a temperature condition. The power condition indicates that a total power of heating elements is less than a power threshold. The temperature condition indicates that a real-time temperature is a thermistor corresponding to each of the heating elements is less than a temperature threshold. The on-off combined state includes on/off states of the heating elements. The present disclosure delays turning on/off a corresponding heating element according to the on-off combined state for the heating elements in the air fryer. In the whole process, the present disclosure flexibly controls the on/off states of the heating elements in the air fryer with the power condition and/or the temperature condition, and ensures cooking effects of different cooking spaces in the air fryer. Meanwhile, by delaying turning on/off the heating element, the present disclosure prevents multiple heating elements from being simultaneously turned on/off, such that the air fryer does not generate a high instantaneous power to cause an excessive circuit load, ensuring safety of the circuit in use.

In actual application, the determination unit is specifically configured to:
determine a preferential heating element in the air fryer according to the power condition, where the preferential heating element includes at least one heating element meeting the power condition in the air fryer; and
determine the on-off combined state for the heating elements in the air fryer according to the preferential heating element.

Accordingly, the control unit is further configured to delay turning on the preferential heating element according to the on-off combined state for the heating elements in the air fryer.

In actual application, the heating control apparatus for an air fryer further includes:
a re-determination unit, configured to re-determine, after turning on the preferential heating element is delayed according to the on-off combined state for the heating elements in the air fryer, the on-off combined state for the heating elements in the air fryer according to the temperature condition.

The control unit is further configured to delay, if a re-determined on-off combined state changes, turning on/off the corresponding heating element according to the changed on-off combined state.

In actual application, the re-determination unit is specifically configured to:
traverse real-time thermistor temperatures of the heating elements according to a first time interval;
compare the real-time thermistor temperature of each of the heating elements with a set target temperature of the corresponding heating element to obtain a comparison result; and
re-determine the on-off combined state for all the heating elements in the air fryer according to the comparison result.

The comparison result includes: If the real-time thermistor temperature is greater than the target temperature, the corresponding heating element in the air fryer is determined as the off state. If the real-time thermistor temperature is less than or equal to the target temperature, the corresponding heating element in the air fryer is determined as the on state.

In actual application, the heating control apparatus for an air fryer further includes:
a query unit, configured to query, before the on-off combined state for the heating elements in the air fryer is re-determined according to the temperature condition, according to a heating parameter input by a user, set target temperatures of different heating elements in the air fryer from a preset parameter mapping table, where the parameter mapping table records the set target temperatures of the different heating elements in the air fryer corresponding to different heating parameters.

The control unit is further configured to control, according to the set target temperatures of the different heating elements, the heating elements in the air fryer for the heating.

In actual application, the control unit is specifically configured to:
determine enable flags of the heating elements in the air fryer according to the on-off combined state for the heating elements in the air fryer; and
control, according to the enable flags of the heating elements in the air fryer, a time of delaying turning on/off a relay corresponding to the corresponding heating element.

In actual application, the control unit is further specifically configured to:
preset polling times of relays corresponding to the different heating elements;
perform polling according to a second time interval on the relays corresponding to the heating elements in the air fryer, so as to determine whether a polling count reaches a polling time of a corresponding relay, where the second time interval is less than the first time interval; and
turn on/off, if yes, the relay corresponding to the corresponding heating element according to the enable flags of the heating elements in the air fryer, so as to turn on/off the corresponding heating element.

In actual application, the control unit is further specifically configured to:
determine, before performing polling according to a second time interval on the relays corresponding to the heating elements in the air fryer, so as to determine whether a polling count reaches a polling time of a corresponding relay, according to the enable flags of the heating elements in the air fryer, whether the enable flags of the heating elements are simultaneously in the on state; and
adjust, if yes, an enable flag of at least one heating element in the air fryer to the off state, so as to turn off a relay corresponding to the at least one heating element.

In actual application, the control unit is further specifically configured to:
perform, if an enable flag of a first heating element in the air fryer is adjusted to the off state, the polling according to the second time interval on a first relay corresponding to the first heating element in the air fryer, so as to determine whether the polling count reaches a polling time of the first relay;
turn off, if yes, the first relay corresponding to the first heating element, so as to turn off the first heating element; and perform the polling on another relay corresponding to another heating element in the air fryer, so as to determine whether the polling count reaches a polling time of the another relay; and
turn on, if yes, the another relay corresponding to the another heating element, so as to turn on the another heating element.

In actual application, the heating control apparatus for an air fryer further includes:
a first adjustment unit, configured to adjust, after turning on/off a corresponding heating element is delayed according to the on-off combined state for the heating elements in the air fryer, in response to an interactive instruction for the heating elements, the on/off states and/or heating powers of the heating elements in the air fryer according to the interactive instruction.

The control unit is further configured to delay turning on/off the corresponding heating element in the air fryer according to adjusted on/off states of the heating elements; and/or control, according to adjusted heating powers of the heating elements, the corresponding heating element in the air fryer for the heating.

In actual application, the heating control apparatus for an air fryer further includes:
an acquisition unit, configured to acquire, after turning on/off a corresponding heating element is delayed according to the on-off combined state for the heating elements in the air fryer, information of food cooked in the air fryer; and
a second adjustment unit, configured to adjust heating powers and/or heating times of the heating elements in the air fryer according to the information of the food cooked in the air fryer.

The control unit is further configured to control, according to adjusted heating powers and/or adjusted heating times of the heating elements, the corresponding heating element in the air fryer for the heating.

It is to be noted that other corresponding description on each functional unit involved in the heating control apparatus for an air fryer according to the embodiment of the present disclosure may refer to corresponding description in FIGS. 1-5, and is not repeated herein.

Based on the method shown in FIGS. 1-5, an embodiment further provides a storage medium accordingly. A computer program is stored in the storage medium. The computer program is executed by a processor to implement the heating control method for an air fryer shown in FIGS. 1-5.

Based on this understanding, the technical solutions of the present disclosure may be implemented in a form of a software product. The software product may be stored in a non-volatile storage medium (which may be a compact disc read-only memory (CD-ROM), a USB flash disk, a removable hard disk, or the like), and includes a plurality of instructions to enable an electronic device (which may be a personal computer, a server, a network device, or the like) to perform the method in each embodiment of the present disclosure.

Based on the method shown in FIGS. 1-5, and the virtual apparatus embodiment shown in FIG. 7, in order to achieve the above purposes, an embodiment of the present disclosure further provides a physical device for heating control of an air fryer, which may specifically be a computer, a smartphone, a tablet computer, a smartwatch, a server, or other network devices. The physical device includes a storage medium and a processor. The storage medium is configured to store a computer program. The processor is configured to execute the computer program to implement the heating control method for an air fryer shown in FIGS. 1-5.

Optionally, the physical device may further include a user interface, a network interface, a camera, a radio frequency (RF) circuit, a sensor, an audio circuit, a wireless fidelity (Wi-Fi) module, etc. The user interface may include a display, and an input unit such as a keyboard, and an optional user interface may further include a universal serial bus (USB) interface, a card reader interface, etc. The network interface may optionally include a standard wired interface, a wireless interface (such as a Wi-Fi interface), etc.

In an exemplary embodiment, referring to FIG. 8, the physical device includes a communication bus, a processor, a memory, and a communication interface, and may further include an input/output interface and a display device. Functional units may communicate with each other through the communication bus. The memory is configured to store a computer program. The processor is configured to execute the program in the memory to implement the heating control method for an air fryer in the above embodiment.

It is to be understood by those skilled in the art that the structure of the physical device for heating control of an air fryer provided by the embodiment does not constitute a limitation to the physical device, and may include more or fewer components than those shown, or combine some components, or have different component arrangements.

The storage medium may further include an operating system and a network communication module. The operating system is a program for managing hardware and software resources of the physical device for heating control of an air fryer, and is configured to support an information processing program and other software and/or programs. The network communication module is configured to realize communication between components in the storage medium, and communication between other hardware and software in a physical information processing device.

Through the description of the foregoing implementations, those skilled in the art can clearly understand that the present disclosure may be implemented by means of software plus a necessary universal hardware platform, and may also be implemented by means of hardware. By applying the technical solutions of the present disclosure, compared with the existing method, the present disclosure flexibly controls the on/off states of the heating elements in the air fryer with the power condition and/or the temperature condition, and ensures cooking effects of different cooking spaces in the air fryer. Meanwhile, by delaying turning on/off the heating element, the present disclosure prevents multiple heating elements from being simultaneously turned on/off, such that the air fryer does not generate a high instantaneous power to cause an excessive circuit load, ensuring safety of the circuit in use.

Those skilled in the art should understand that the drawings are only schematic diagrams of the preferred embodiment, and the modules or flows in the drawings are not necessary for implementing the present disclosure. Those of ordinary skill in the art may understand that the modules of the apparatus in the embodiment can be distributed in the apparatus in the embodiment according to the description in the embodiment, or can be changed accordingly and located in one or more apparatuses different from the embodiment. The modules in the above embodiment can be combined into one module, or further disassembled into a plurality of sub-modules.

The serial numbers of the embodiments of the present disclosure are merely for description and do not represent a preference of the embodiments. The above disclosed are merely several specific embodiments of the present disclosure, and the present disclosure are not limited thereto. Any changes that can be conceived by those skilled in the art should fall within the protection scope of the present disclosure.

## Claims

1. A heating control method for an air fryer, **characterized by** comprising:
in response to heating of the air fryer, determining an on-off combined state for heating elements in the air fryer according to a power condition and/or a temperature condition, wherein the power condition indicates that a total power of heating elements is less than a power threshold, the temperature condition indicates that a real-time thermistor temperature of each of the heating elements is less than a temperature threshold, and the on-off combined state comprises on/off states of the heating elements; and
delaying turning on/off a corresponding heating element according to the on-off combined state for the heating elements in the air fryer.

2. The method according to claim 1, **characterized in that** the determining the on-off combined state for the heating elements in the air fryer according to the power condition and/or the temperature condition comprises:
determining a preferential heating element in the air fryer according to the power condition, wherein the preferential heating element comprises at least one heating element meeting the power condition in the air fryer;
determining the on-off combined state for the heating elements in the air fryer according to the preferential heating element; and
delaying turning on the preferential heating element according to the on-off combined state for the heating elements in the air fryer.

3. The method according to claim 2, **characterized in that** after the delaying turning on the preferential heating element according to the on-off combined state for the heating elements in the air fryer, the method further comprises:
re-determining the on-off combined state for the heating elements in the air fryer according to the temperature condition; and
if a re-determined on-off combined state changes, delaying turning on/off the corresponding heating element according to the changed on-off combined state.

4. The method according to claim 3, **characterized in that** the re-determining the on-off combined state for the heating elements in the air fryer according to the temperature condition comprises:
traversing real-time thermistor temperatures of the heating elements according to a first time interval;
comparing the real-time thermistor temperature of each of the heating elements with a set target temperature of the corresponding heating element to obtain a comparison result; and
re-determining the on-off combined state for the heating elements in the air fryer according to the comparison result;
wherein the comparison result comprises: if the real-time thermistor temperature is greater than the target temperature, determining the corresponding heating element in the air fryer as the off state; and if the real-time thermistor temperature is less than or equal to the target temperature, determining the corresponding heating element in the air fryer as the on state.

5. The method according to claim 3, **characterized in that** before the re-determining the on-off combined state for the heating elements in the air fryer according to the temperature condition, the method further comprises:
according to a heating parameter input by a user, querying set target temperatures of different heating elements in the air fryer from a preset parameter mapping table, wherein the parameter mapping table records the set target temperatures of the different heating elements in the air fryer corresponding to different heating parameters; and
according to the set target temperatures of the different heating elements, controlling the heating elements in the air fryer for the heating.

6. The method according to any one of claims 1 to 5, **characterized in that** the delaying turning on/off the corresponding heating element according to the on-off combined state for the heating elements in the air fryer comprises:
determining enable flags of the heating elements in the air fryer according to the on-off combined state for the heating elements in the air fryer; and
according to the enable flags of the heating elements in the air fryer, controlling a time of delaying turning on/off a relay corresponding to the corresponding heating element.

7. The method according to claim 6, **characterized in that** the according to the enable flags of the heating elements in the air fryer, controlling the time of delaying turning on/off the relay corresponding to the corresponding heating element comprises:
presetting polling times of relays corresponding to the different heating elements;
performing polling according to a second time interval on the relays corresponding to the heating elements in the air fryer, so as to determine whether a polling count reaches a polling time of a corresponding relay, wherein the second time interval is less than the first time interval; and
if yes, turning on/off the relay corresponding to the corresponding heating element according to the enable flags of the heating elements in the air fryer, so as to turn on/off the corresponding heating element.

8. The method according to claim 7, **characterized in that** before the performing polling according to the second time interval on the relays corresponding to the heating elements in the air fryer, so as to determine whether the polling count reaches the polling time of the corresponding relay, the method further comprises:
according to the enable flags of the heating elements in the air fryer, determining whether the enable flags of the heating elements are simultaneously in the on state; and
if yes, adjusting an enable flag of at least one heating element in the air fryer to the off state, so as to turn off a relay corresponding to the at least one heating element.

9. The method according to claim 8, **characterized in that** if an enable flag of a first heating element in the air fryer is adjusted to the off state, the polling is performed according to the second time interval on a first relay corresponding to the first heating element in the air fryer, so as to determine whether the polling count reaches a polling time of the first relay;
if yes, the first relay corresponding to the first heating element is turned off, so as to turn off the first heating element; and the polling is performed on another relay corresponding to another heating element in the air fryer, so as to determine whether the polling count reaches a polling time of the another relay; and
if yes, the another relay corresponding to the another heating element is turned on, so as to turn on the another heating element.

10. The method according to any one of claims 1 to 5, **characterized in that** after the delaying turning on/off the corresponding heating element according to the on-off combined state for the heating elements in the air fryer, the method further comprises:
in response to an interactive instruction for the heating elements, adjusting the on/off states and/or heating powers of the heating elements in the air fryer according to the interactive instruction;
delaying turning on/off the corresponding heating element in the air fryer according to adjusted on/off states of the heating elements; and/or
according to adjusted heating powers of the heating elements, controlling the corresponding heating element in the air fryer for the heating.

11. The method according to any one of claims 1 to 5, **characterized in that** after the delaying turning on/off the corresponding heating element according to the on-off combined state for the heating elements in the air fryer, the method further comprises:
acquiring information of food cooked in the air fryer;
adjusting heating powers and/or heating times of the heating elements in the air fryer according to the information of the food cooked in the air fryer; and
according to adjusted heating powers and/or adjusted heating times of the heating elements, controlling the corresponding heating element in the air fryer for the heating.

12. A heating control apparatus for an air fryer, **characterized by** comprising:
a determination unit (61), configured to determine, in response to heating of the air fryer, an on-off combined state for heating elements in the air fryer according to a power condition and/or a temperature condition, wherein the power condition indicates that a total power of heating elements is less than a power threshold, the temperature condition indicates that a real-time thermistor temperature of each of the heating elements is less than a temperature threshold, and the on-off combined state comprises on/off states of the heating elements; and
a control unit (62), configured to delay turning on/off a corresponding heating element according to the on-off combined state for the heating elements in the air fryer.
